(19) Europäisches Patentamt / European Patent Office / Office européen des brevets

(11) **EP 2 074 178 B1**

(12) **EUROPEAN PATENT SPECIFICATION**

(45) Date of publication and mention
of the grant of the patent:
**28.12.2011 Bulletin 2011/52**

(51) Int Cl.:
*C09C 1/30* (2006.01)    *C09C 3/10* (2006.01)
*C04B 14/06* (2006.01)    *C04B 20/10* (2006.01)
*C04B 20/12* (2006.01)    *E01C 13/06* (2006.01)

(21) Application number: **07852399.0**

(22) Date of filing: **11.09.2007**

(86) International application number:
**PCT/US2007/019732**

(87) International publication number:
**WO 2008/033342 (20.03.2008 Gazette 2008/12)**

(54) **MULTI-LAYERED RESIN COATED SAND**

MEHRSCHICHTIGER HARZBESCHICHTETER SAND

SABLE ENROBÉ DE RÉSINE MULTCOUCHES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **11.09.2006 US 843597 P**

(43) Date of publication of application:
**01.07.2009 Bulletin 2009/27**

(73) Proprietor: **Dow Global Technologies LLC
Midland, MI 48674 (US)**

(72) Inventors:
• **CHEREAU, Loic F.
Langnau am Albis
ZH8135 (CH)**
• **DAMEN, Julien H.J.M.
CH-8932 Mettmenstetten (CH)**
• **BONGARTZ, Herbert
CH-8840 Enisiedeln (CH)**

(74) Representative: **Raynor, John
Beck Greener
Fulwood House
12 Fulwood Place
London
WC1V 6HR (GB)**

(56) References cited:
**EP-A- 0 377 925     EP-A- 1 486 613
WO-A-02/097194     WO-A-2004/022853**

**Description**

BACKGROUND OF INVENTION

Field of the Invention

Embodiments disclosed herein relate generally to polymer coated particulate materials. In another aspect, embodiments described herein relate to a process to produce polymer coated particulate materials. In more specific aspects, embodiments described herein relate to particulate materials such as polymer coated sands, where the sands or other particulate materials may be coated or incorporated with one or more layers of a polymer or polymeric mixture.

Background

Artificial turf consists of a multitude of artificial grass tufts extending upward from a sheet substrate. Infill material dispersed between the artificial grass tufts maintains the artificial grass tufts in an upright condition, preventing them from lying down flat or in another undesirable manner.

Several different materials have been used as infill, including silica sand coated with an elastomeric material, as described in U.S. Patent No. 5,043,320. In the '320 patent, the infill granules are formed by mixing silica sand and an aqueous emulsion of a synthetic rubber. The sand is preheated to 140°C and the mixture is maintained at a temperature in excess of 100°C to evaporate water, returning a dry coating on each grain of sand.

As another example of materials used as intill, U.S. Patent Application Publication No. 20060100342 describes intill formed by coating silica sand with either elastomeric materials or thermoplastic polymers. The infill granules are formed by first heating a portion of the silica to a temperature between 200°C and 300°C, placing the sand in a mixer, and adding elastomer or thermoplastic polymer pellets while mixing. The thermoplastic polymer then melts, coating the sand. The contents of the mixture are then cooled using a water spray and air flowing through the mixer. The exact amount and timing of the water spray is critical to result in a free-flowing material without significant formation of agglomerates.

As a third example of materials used as infill, U.S. Patent Application Publication No. 20050003193 describes infill granules formed by coating a core of recycled tire material with a plastic. The infill granules are formed by mixing the plastic and the recycled tire granules, melting the plastic, and rolling the mixture to form sheets. The sheets are cooled, solidifying the plastic, and then the sheets undergo granulation, resulting in the plastic coated recycled tire granules for use as infill.

The choice of infill material, core and coating, may greatly influence the overall characteristics of the artificial turf. It is desirable to have an infill that has a homogeneous and complete coating, resulting in both good appearance and good wear resistance. It is also desirable that the infill have good skid and heat resistance for long term use and to avoid compaction of the infill. The infill should have a soft coating, providing the desired haptics (feel), aesthetics, and player safety, and the infill needs to be free flowing for ease of application.

Infill materials produced as described in the patents and publication referenced above often result in infill that does not exhibit a good balance of the desired properties. In addition, the processes used may be inefficient, result in an incomplete coating of the granular material, or produce excess agglomerates.

Accordingly, there exists a need for improvements in the processes used to produce infill. It is desired to have a process that provides a lower cost with reduced waste. It is also desired to have a resin that provides a uniform, homogeneous coating, resulting in superior wear resistance, good haptics and aesthetics, and excellent player safety. Improvements are also needed in the resulting properties and the overall balance of the properties of the infill.

The invention provides a particulate material having: a particulate substrate coated with a first layer comprising a first thermoplastic polymer and a second layer comprising a second thermoplastic polymer; wherein the melting point of the first thermoplastic polymer is greater than the melting point of the second thermoplastic polymer.

In one aspect, embodiments described herein relate to polymer coated particulate materials. In more specific aspects, embodiments described herein relate to particulate materials such as polymer coated sands, where the sands or other particulate materials may be coated or incorporated with one or more layers of a polymer or polymeric mixture.

Particulate Materials

The particulate materials to be coated with a polymeric shell, in some embodiments, may include mineral grains and sands. In other embodiments, the particulate materials may include silica-based sands, such as quartz sands, white sands, such as limestone-based sands, arkose, and sands that contain magnetite, chlorite, glauconite, or gypsum. In other embodiments, the mineral grains may include various fillers, such as calcium carbonate, talc, glass fibers, polymeric fibers (including nylon, rayon, cotton, polyester, and polyamide, and metal fibers. In other embodiments, the particulate materials to be coated may include rubber particles, including recycled tire.

The mineral grains and sands may range in size from 0.1 to 3 mm in some embodiments. In other embodiments, the mineral grains and sands may range in size from 0.2 to 2.5 mm; from 0.3 to 2.0 mm in other embodiments; and from 0.4 to 1.2 mm in yet other embodiments.

Polymer

The polymeric resin used to coat the particulate material may vary depending upon the particular application and the desired result. In one embodiment, for instance, the polymeric resin is an olefin polymer. As used herein, an olefin polymer, in general, refers to a class of polymers formed from hydrocarbon monomers having the general formula $C_nH_{2n}$. The olefin polymer may be present as a copolymer, such as an interpolymer, a block copolymer, or a multi-block interpolymer or copolymer.

In one particular embodiment, for instance, the olefin polymer may comprise an alpha-olefin interpolymer of ethylene with at least one comonomer selected from the group consisting of a $C_3$-$C_{20}$ linear, branched or cyclic diene, or an ethylene vinyl compound, such as vinyl acetate, and a compound represented by the formula $H_2C=CHR$ wherein R is a $C_1$-$C_{20}$ linear, branched or cyclic alkyl group or a $C_6$-$C_{20}$ aryl group. Examples of comonomers include propylene, 1-butene, 3-methyl-1-butene, 4-methyl-1-pentene, 3-methyl-1-pentene, 1-heptene, 1-hexene, 1-octene, 1-decene, and 1-dodecene.

In other embodiments, the thermoplastic resin may be an alpha-olefin interpolymer of propylene with at least one comonomer selected from the group consisting of ethylene, a $C_4$-$C_{20}$ linear, branched or cyclic diene, and a compound represented by the formula $H_2C=CHR$ wherein R is a $C_1$-$C_{20}$ linear, branched or cyclic alkyl group or a $C_6$-$C_{20}$ aryl group. Examples of comonomers include ethylene, 1-butene, 3-methyl-1-butene, 4-methyl-1-pentene, 3-methyl-1-pentene, 1-heptene, 1-hexene, 1-octene, 1-decene, and 1-dodecene. In some embodiments, the comonomer is present at about 5% by weight to about 25% by weight of the interpolymer. In one embodiment, a propylene-ethylene interpolymer is used.

Other examples of thermoplastic resins which may be used in the present disclosure include homopolymers and copolymers (including elastomers) of an olefin such as ethylene, propylene, 1-butene, 3-methyl-1-butene, 4-methyl-1-pentene, 3-methyl-1-pentene, 1-heptene, 1-hexene, 1-octene, 1-decene, and 1-dodecene as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butene copolymer, and propylene-1-butene copolymer; copolymers (including elastomers) of an alpha-olefin with a conjugated or non-conjugated diene as typically represented by ethylene-butadiene copolymer and ethylene-ethylidene norbornene copolymer; and polyolefins (including elastomers) such as copolymers of two or more alpha-olefins with a conjugated or non-conjugated diene as typically represented by ethylene-propylene-butadiene copolymer, ethylene-propylene- dicyclopentadiene copolymer, ethylene-propylene-1,5-hexadiene copolymer, and ethylene-propylene-ethylidene norbornene copolymer; ethylene-vinyl compound copolymers such as ethylene-vinyl acetate copolymers with N-methylol functional comonomers, ethylene-vinyl alcohol copolymers with N-methylol functional comonomers, ethylene-vinyl chloride copolymer, ethylene acrylic acid or ethylene-(meth)acrylic acid copolymers, and ethylene-(meth)acrylate copolymer; styrenic copolymers (including elastomers) such as polystyrene, ABS, acrylonitrile-styrene copolymer, methylstyrene-styrene copolymer; and styrene block copolymers (including elastomers) such as styrene-butadiene copolymer and hydrate thereof, and styrene-isoprene-styrene triblock copolymer; polyvinyl compounds such as polyvinyl chloride, polyvinylidene chloride, vinyl chloride- vinylidene chloride copolymer, polymethyl acrylate, and polymethyl methacrylate; polyamides such as nylon 6, nylon 6,6, and nylon 12; thermoplastic polyesters such as polyethylene terephthalate and polybutylene terephthalate; polycarbonate, polyphenylene oxide, and the like. These resins may be used either alone or in combinations of two or more.

In particular embodiments, polyolefins such as polypropylene, polyethylene, and copolymers thereof and blends thereof, as well as ethylene-propylene-diene terpolymers may be used. In some embodiments, the olefinic polymers include homogeneous polymers described in U.S. Pat. No. 3,645,992 by Elston; high density polyethylene (HDPE) as described in U.S. Pat. No. 4,076,698 to Anderson; heterogeneously branched linear low density polyethylene (LLDPE); heterogeneously branched ultra low linear density (ULDPE); homogeneously branched, linear ethylene/alpha-olefin copolymers; homogeneously branched, substantially linear ethylene/alpha-olefin polymers which can be prepared, for example, by a process disclosed in U.S. Pat. Nos. 5,272,236 and 5,278,272, heterogeneously branched linear ethylene/ alpha olefin polymers; and high pressure, free radical polymerized ethylene polymers and copolymers such as low density polyethylene (LDPE).

In another embodiment, the thermoplastic resin may include an ethylenecarboxylic acid copolymer, such as, ethylene-vinyl acetate (EVA) copolymers, ethylene-acrylic acid (EAA) and ethylene-methacrylic acid copolymers such as, for example, those available under the tradenames PRIMACOR™ from the Dow Chemical Company, NUCREL™ from DuPont, and ESCOR™ from ExxonMobil, and described in U.S. Pat. Nos. 4,599,392, 4,988,781, and 5,384,373. Exemplary polymers include polypropylene, (both impact modifying polypropylene, isotactic polypropylene, atactic polypropylene, and random ethylene/propylene copolymers), various types of polyethylene, including high pressure, free-radical LDPE, Ziegler Natta LLDPE, metallocene PE, including multiple reactor PE ("in reactor") blends of Ziegler-Natta PE and metallocene PE, such as products disclosed in U.S. Patents No. 6,545,088, 6,538,070, 6,566,446, 5,844,045, 5,869,575, and 6,448,341. Homogeneous polymers such as olefin plastomers and elastomers, ethylene and propylene-based copolymers (for example polymers available under the trade designation VERSIFY™ available from The Dow Chemical Company and VISTAMAXX™ available from ExxonMobil) may also be useful in some embodiments. Of course, blends of polymers may be used as well. In some embodiments, the blends include two different Ziegler-Natta polymers. In other embodiments, the blends may include blends of a Ziegler-Natta and a metallocene polymer. In still other embodiments, the thermoplastic resin used herein may be a blend of two different metallocene polymers.

In one particular embodiment, the thermoplastic resin may comprise an alpha-olefin interpolymer of ethylene with a comonomer comprising an alkene, such as 1-octene. The ethylene and octene copolymer may be present alone or in combination with another thermoplastic resin, such as ethylene-acrylic acid copolymer. When present together, the weight ratio between the ethylene and octene copolymer and the ethylene-acrylic acid copolymer may be from about 1:10 to about 10:1, such as from about 3:2 to about 2:3. The polymeric resin, such as the ethylene-octene copolymer, may have a crystallinity of less than about 50%, such as less than about 25%. In some embodiments, the crystallinity of the polymer may be from 5 to 35 percent. In other embodiments, the crystallinity may range from 7 to 20 percent.

Embodiments disclosed herein may also include a polymeric component that may include at least one multi-block olefin interpolymer. Suitable multi-block olefin interpolymers may include those described in U.S. Provisional Patent Application No. 60/818,911, for example. The term "multi-block copolymer" or refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In certain embodiments, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of polydispersity index (PDI or $M_w/M_n$), block length distribution, and/or block number distribution due to the unique process making of the copolymers. More specifically, when produced in a continuous process, embodiments of the polymers may possess a PDI ranging from about 1.7 to about 8; from about 1.7 to about 3.5 in other embodiments; from about 1.7 to about 2.5 in other embodiments; and from about 1.8 to about 2.5 or from about 1.8 to about 2.1 in yet other embodiments. When produced in a batch or semi-batch process, embodiments of the polymers may possess a PDI ranging from about 1.0 to about 2.9; from about 1.3 to about 2.5 in other embodiments; from about 1.4 to about 2.0 in other embodiments; and from about 1.4 to about 1.8 in yet other embodiments.

One example of the multi-block olefin interpolymer is an ethylene/$\alpha$-olefin block interpolymer. Another example of the multi-block olefin interpolymer is a propylene/$\alpha$-olefin interpolymer. The following description focuses on the interpolymer as having ethylene as the majority monomer, but applies in a similar fashion to propylene-based multi-block interpolymers with regard to general polymer characteristics.

The ethylene/a-olefin multi-block interpolymers may comprise ethylene and one or more co-polymerizable $\alpha$-olefin comonomers in polymerized form, characterized by multiple (i.e., two or more) blocks or segments of two or more polymerized monomer units differing in chemical or physical properties (block interpolymer), preferably a multi-block interpolymer. In some embodiments, the multi-block interpolymer may be represented by the following formula:

(AB)n

where n is at least 1, preferably an integer greater than 1, such as 2, 3, 4, 5, 10, 15, 20, 30, 40, 50, 60, 70, 80, 90, 100, or higher; "A" represents a hard block or segment; and "B" represents a soft block or segment. Preferably, A's and B's are linked in a linear fashion, not in a branched or a star fashion. "Hard" segments refer to blocks of polymerized units in which ethylene is present in an amount greater than 95 weight percent in some embodiments, and in other embodiments greater than 98 weight percent. In other words, the comonomer content in the hard segments is less than 5 weight percent in some embodiments, and in other embodiments, less than 2 weight percent of the total weight of the hard segments. In some embodiments, the hard segments comprise all or substantially all ethylene. "Soft" segments, on the other hand, refer to blocks of polymerized units in which the comonomer content is greater than 5 weight percent of the total weight of the soft segments in some embodiments, greater than 8 weight percent, greater than 10 weight percent, or greater than 15 weight percent in various other embodiments. In some embodiments, the comonomer content in the soft segments may be greater than 20 weight percent, greater than 25 eight percent, greater than 30 weight percent, greater than 35 weight percent, greater than 40 weight percent, greater than 45 weight percent, greater than 50 weight percent, or greater than 60 weight percent in various other embodiments.

In some embodiments, A blocks and B blocks are randomly distributed along the polymer chain. In other words, the block copolymers do not have a structure like:

AAA-AA-BBB-BB

In other embodiments, the block copolymers do not have a third block. In still other embodiments, neither block A nor block B comprises two or more segments (or sub-blocks), such as a tip segment.

The multi-block interpolymers may be characterized by an average block index, AB1, ranging from greater than zero to about 1.0 and a molecular weight distribution, $M_w/M_n$, greater than about 1.3. The average block index, ABI, is the weight average of the block index ("BI") for each of the polymer fractions obtained in preparative TREF from 20°C and 110°C, with an increment of 5°C:

$$ABI = \sum (w_i BI_i)$$

where $BI_i$ is the block index for the $i^{th}$ fraction of the multi-block interpolymer obtained in preparative TREF, and $w_i$ is the weight percentage of the $i^{th}$ fraction.

Similarly, the square root of the second moment about the mean, hereinafter referred to as the second moment weight average block index, may be defined as follows:

$$2^{nd} \text{ moment weight average BI} = \sqrt{\frac{\sum (w_i (BI_i - ABI)^2)}{\frac{(N-1)\sum w_i}{N}}}$$

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_X$ is the analytical temperature rising elution fractionation (ATREF) elution temperature for the $i^{th}$ fraction (preferably expressed in Kelvin), $P_X$ is the ethylene mole fraction for the $1^{th}$ fraction, which may be measured by NMR or IR as described below. $P_{AB}$ is the ethylene mole fraction of the whole ethylene/α-olefin interpolymer (before fractionation), which also may be measured by NMR or IR. $T_A$ and $P_A$ are the A TREF elution temperature and the ethylene mole fraction for pure "hard segments" (which refer to the crystalline segments of the interpolymer). As an approximation or for polymers where the "hard segment" composition is unknown, the $T_A$ and $P_A$ values are set to those for high density polyethylene homopolymer.

$T_{AB}$ is the ATREF elution temperature for a random copolymer of the same composition (having an ethylene mole fraction of $P_{AB}$) and molecular weight as the multi-block interpolymer. $T_{AB}$ may be calculated from the mole fraction of ethylene (measured by NMR) using the following equation:

$$Ln\, P_{AB} = \alpha/T_{AB} + \beta$$

where α and β are two constants which may be determined by a calibration using a number of well characterized preparative TREF fractions of a broad composition random copolymer and/or well characterized random ethylene copolymers with narrow composition. It should be noted that α and β may vary from instrument to instrument. Moreover, one would need to create an appropriate calibration curve with the polymer composition of interest, using appropriate molecular weight ranges and comonomer type for the preparative TREF fractions and/or random copolymers used to create the calibration. There is a slight molecular weight effect. If the calibration curve is obtained from similar molecular weight ranges, such effect would be essentially negligible. In some embodiments, random ethylene copolymers and/or preparative TREF fractions of random copolymers satisfy the following relationship:

$$Ln\, P = -237.83/T_{ATREF} + 0.639$$

The above calibration equation relates the mole fraction of ethylene, P, to the analytical TREF elution temperature, $T_{ATREF}$, for narrow composition random copolymer and/or preparative TREF fractions of broad composition random copolymers. Txo is the ATREF temperature for a random copolymer of the same composition and having an ethylene mole fraction of $P_X$. $T_{XO}$ may be calculated from $LnP_X = \alpha/T_{XO} + \beta$. Conversely, $P_{XO}$ is the ethylene mole fraction for a random copolymer of the same composition and having an ATREF temperature of $T_X$, which may be calculated from $Ln\ Pxo = \alpha/T_X + \beta$.

Once the block index (BI) for each preparative TREF fraction is obtained, the weight average block index, ABI, for the whole polymer may be calculated. In some embodiments, ABI is greater than zero but less than about 0.4 or from about 0.1 to about 0.3. In other embodiments, ABI is greater than about 0.4 and up to about 1.0. Preferably, ABI should be in the range of from about 0.4 to about 0.7, from about 0.5 to about 0.7, or from about 0.6 to about 0.9. In some embodiments, ABI is in the range of from about 0.3 to about 0.9, from about 0.3 to about 0.8, or from about 0.3 to about 0.7, from about 0.3 to about 0.6, from about 0.3 to about 0.5, or from about 0.3 to about 0.4. In other embodiments, ABI is in the range of from about 0.4 to about 1.0, from about 0.5 to about 1.0, or from about 0.6 to about 1.0, from about 0.7 to about 1.0, from about 0.8 to about 1.0, or from about 0.9 to about 1.0.

Another characteristic of the multi-block interpolymer is that the interpolymer may comprise at least one polymer fraction which may be obtained by preparative TREF, wherein the fraction has a block index greater than about 0.1 and up to about 1.0 and the polymer having a molecular weight distribution, $M_w/M_n$, greater than about 1.3. In some embodiments, the polymer fraction has a block index greater than about 0.6 and up to about 1.0, greater than about 0.7 and up to about 1.0, greater than about 0.8 and up to about 1.0, or greater than about 0.9 and up to about 1.0. In other embodiments, the polymer fraction has a block index greater than about 0.1 and up to about 1.0, greater than about 0.2 and up to about 1.0, greater than about 0.3 and up to about 1.0, greater than about 0.4 and up to about 1.0, or greater than about 0.4 and up to about 1.0. In still other embodiments, the polymer fraction has a block index greater than about 0.1 and up to about 0.5, greater than about 0.2 and up to about 0.5, greater than about 0.3 and up to about 0.5, or greater than about 0.4 and up to about 0.5. In yet other embodiments, the polymer fraction has a block index greater than about 0.2 and up to about 0.9, greater than about 0.3 and up to about 0.8, greater than about 0.4 and up to about 0.7, or greater than about 0.5 and up to about 0.6.

Ethylene $\alpha$-olefin multi-block interpolymers used in embodiments of the invention may be interpolymers of ethylene with at least one $C_3$-$C_{20}$ $\alpha$-olefin. The interpolymers may further comprise $C_4$-$C_{18}$ diolefin and/or alkenylbenzene. Suitable unsaturated comonomers useful for polymerizing with ethylene include, for example, ethylenically unsaturated monomers, conjugated or non-conjugated dienes, polyenes, alkenylbenzenes, etc. Examples of such comonomers include $C_3$-$C_{20}$ $\alpha$-olefins such as propylene, isobutylene, 1-butene, 1-hexene, 1-pentene, 4-methyl-1-pentene, 1-heptene, 1-octene, 1-nonene, 1-decene, and the like. 1-Butene and 1-octene are especially preferred. Other suitable monomers include styrene, halo- or alkylsubstituted styrenes, vinylbenzocyclobutane, 1,4-hexadiene, 1,7-octadiene, and naphthenics (such as cyclopentene, cyclohexene, and cyclooctene, for example).

The multi-block interpolymers disclosed herein may be differentiated from conventional, random copolymers, physical blends of polymers, and block copolymers prepared via sequential monomer addition, fluxional catalysts, and anionic or cationic living polymerization techniques. In particular, compared to a random copolymer of the same monomers and monomer content at equivalent crystallinity or modulus, the interpolymers have better (higher) heat resistance as measured by melting point, higher TMA penetration temperature, higher high-temperature tensile strength, and/or higher high-temperature torsion storage modulus as determined by dynamic mechanical analysis. Properties of infill may benefit from the use of embodiments of the multi-block interpolymers, as compared to a random copolymer containing the same monomers and monomer content, the multi-block interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

Other olefin interpolymers include polymers comprising monovinylidene aromatic monomers including styrene, o-methyl styrene, p-methyl styrene, t-butylstyrene, and the like. In particular, interpolymers comprising ethylene and styrene may be used. In other embodiments, copolymers comprising ethylene, styrene and a $C_3$-$C_{20}$ $\alpha$ olefin, optionally comprising a $C_4$-$C_{20}$ diene, may be used.

Suitable non-conjugated diene monomers may include straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornene, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD).

One class of desirable polymers that may be used in accordance with embodiments disclosed herein includes elastomeric interpolymers of ethylene, a $C_3$-$C_{20}$ $\alpha$-olefin, especially propylene, and optionally one or more diene monomers. Preferred $\alpha$-olefins for use in this embodiment are designated by the formula $CH_2$=CHR*, where R* is a linear or branched alkyl group of from 1 to 12 carbon atoms. Examples of suitable $\alpha$-olefins include, but are not limited to, propylene, isobutylene, 1-butene, 1-pentene, 1-hexene, 4-methyl-1-pentene, and 1-octene. A particularly preferred $\alpha$-olefin is propylene. The propylene based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic-dienes comprising from 4 to 20 carbons. Preferred dienes include 1,4-pentadiene, 1,4-hexadiene, 5-ethylidene-2-norbornene, dicyclopentadiene, cyclohexadiene, and 5-butylidene-2-norbornene. A particularly preferred diene is 5-ethylidene-2-norbornene.

The polymers (homopolymers, copolymers, interpolymers and multi-block interpolymers) described herein may have a melt index, $I_2$, from 0.01 to 2000 g/10 minutes in some embodiments; from 0.01 to 1000 g/10 minutes in other embodiments; from 0.01 to 500 g/10 minutes in other embodiments; and from 0.01 to 100 g/10 minutes in yet other embodiments. In certain embodiments, the polymers may have a melt index, $I_2$, from 0.01 to 10 g/10 minutes, from 0.5 to 50 g/10 minutes, from 1 to 30 g/10 minutes, from 1 to 6 g/10 minutes or from 0.3 to 10 g/10 minutes. In certain embodiments, the melt index for the polymers may be approximately 1g/10 minutes, 3 g/10 minutes or 5 g/10 minutes. In other embodiments, the polymers may have a melt index greater than 20 dg/min; greater than 40 dg/min in other embodiments; and greater than 60 dg/min in yet other embodiments.

The polymers described herein may have molecular weights, $M_w$, from 1,000 g/mole to 5,000,000 g/mole in some embodiments; from 1000 g/mole to 1,000,000 in other embodiments; from 10,000 g/mole to 500,000 g/mole in other embodiments; and from 10,000 g/mole to 300,000 g/mole in yet other embodiments. The density of the polymers described herein may be from 0.80 to 0.99 g/cm$^3$ in some embodiments; for ethylene containing polymers from 0.85 g/cm$^3$ to 0.97 g/cm$^3$. In certain embodiments, the density of the ethylene/$\alpha$-olefin polymers may range from 0.860 to 0.925 g/cm$^3$ or 0.867 to 0.910 g/cm$^3$.

In some embodiments, the polymers described herein may have a tensile strength above 10 MPa; a tensile strength $\geq$ 11 MPa in other embodiments; and a tensile strength $\geq$ 13 MPa in yet other embodiments. In some embodiments, the polymers described herein may have an elongation at break of at least 600 percent at a crosshead separation rate of 11 cm/minute; at least 700 percent in other embodiments; at least 800 percent in other embodiments; and at least 900 percent in yet other embodiments.

In some embodiments, the polymers described herein may have a storage modulus ratio, G'(25°C)/G'(100°C), from 1 to 50; from 1 to 20 in other embodiments; and from 1 to 10 in yet other embodiments. In some embodiments, the polymers may have a 70°C compression set of less than 80 percent; less than 70 percent in other embodiments; less than 60 percent in other embodiments; and, less than 50 percent, less than 40 percent, down to a compression set of 0 percent in yet other embodiments.

In some embodiments, the ethylene/$\alpha$-olefin interpolymers may have a heat of fusion of less than 85 J/g. In other embodiments, the ethylene/$\alpha$-olefin interpolymer may have a pellet blocking strength of equal to or less than 100 pounds/foot$^2$ (4800 Pa); equal to or less than 50 lbs/ft$^2$ (2400 Pa) in other embodiments; equal to or less than 5 lbs/ft$^2$ (240 Pa), and as low as 0 lbs/ft$^2$ (0 Pa) in yet other embodiments.

In some embodiments, block polymers made with two catalysts incorporating differing quantities of comonomer may have a weight ratio of blocks formed thereby ranging from 95:5 to 5:95. The elastomeric interpolymers, in some embodiments, have an ethylene content of from 20 to 90 percent, a diene content of from 0.1 to 10 percent, and an $\alpha$-olefin content of from 10 to 80 percent, based on the total weight of the polymer. In other embodiments, the multi-block elastomeric polymers have an ethylene content of from 60 to 90 percent, a diene content of from 0.1 to 10 percent, and an $\alpha$-olefin content of from 10 to 40 percent, based on the total weight of the polymer. In other embodiments, the interpolymer may have a Mooney viscosity (ML (1+4) 125°C) ranging from 1 to 250. In other embodiments, such polymers may have an ethylene content from 65 to 75 percent, a diene content from 0 to 6 percent, and an $\alpha$-olefin content from 20 to 35 percent.

In certain embodiments, the polymer may be a propylene-ethylene copolymer or interpolymer having an ethylene content between 5 and 20% by weight and a melt flow rate (230°C with 2.16 kg weight) from 0.5 to 300 g/10 min. In other embodiments, the propylene-ethylene copolymer or interpolymer may have an ethylene content between 9 and 12% by weight and a melt flow rate (230°C with 2.16 kg weight) from 1 to 100 g/10 min.

In some particular embodiments, the polymer is a propylene-based copolymer or interpolymer. In some embodiments, a propylene/ethylene copolymer or interpolymer is characterized as having substantially isotactic propylene sequences. The term "substantially isotactic propylene sequences" and similar terms mean that the sequences have an isotactic triad (mm) measured by $^{13}$C NMR of greater than about 0.85, preferably greater than about 0.90, more preferably greater than about 0.92 and most preferably greater than about 0.93. Isotactic triads are well-known in the art and are described in, for example, U.S. Pat. No. 5,504,172 and WO 00101745, which refer to the isotactic sequence in terms of a triad unit in the copolymer molecular chain determined by $^{13}$C NMR spectra. In other particular embodiments, the ethylene-α olefin copolymer may be ethylene-butene, ethylene-hexene, or ethylene-octene copolymers or interpolymers. In other particular embodiments, the propylene-α olefin copolymer may be a propylene-ethylene or a propylene-ethylene-butene copolymer or interpolymer.

The polymers described herein (homopolymers, copolymers, interpolymers, multi-block interpolymers) may be produced using a single site catalyst and may have a weight average molecular weight of from about 15,000 to about 5 million, such as from about 20,000 to about 1 million. The molecular weight distribution of the polymer may be from about 1.01 to about 80, such as from about 1.5 to about 40, such as from about 1.8 to about 20.

The resin may also have a relatively low melting point in some embodiments. For instance, the melting point of the polymers described herein may be less than about 160°C, such as less than 130°C, such as less than 120°C. For instance, in one embodiment, the melting point may be less than about 100°C; in another embodiment, the melting point may be less than about 90°C; less than 80°C in other embodiments; and less than 70°C in yet other embodiments. The glass transition temperature of the polymer resin may also be relatively low. For instance, the glass transition temperature may be less than about 50°C, such as less than about 40°C.

In some embodiments, the polymer may have a Shore A hardness from 30 to 100. In other embodiments, the polymer may have a Shore A hardness from 40 to 90; from 30 to 80 in other embodiments; and from 40 to 75 in yet other embodiments.

The olefin polymers, copolymers, interpolymers, and multi-block interpolymers may be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an olefin polymer, or it may be copolymerized with ethylene and an optional additional comonomer to form an interpolymer of ethylene, the functional comonomer and optionally other comonomer(s). Means for grafting functional groups onto polyethylene are described for example in U.S. Patents Nos. 4,762,890, 4,927,888, and 4,950,541. One particularly useful functional group is maleic anhydride.

The amount of the functional group present in the functional polymer may vary. The functional group may be present in an amount of at least about 1.0 weight percent in some embodiments; at least about 5 weight percent in other embodiments; and at least about 7 weight percent in yet other embodiments. The functional group may be present in an amount less than about 40 weight percent in some embodiments; less than about 30 weight percent in other embodiments; and less than about 25 weight percent in yet other embodiments.

Additives

Additives and adjuvants may be included in any formulation comprising the above described polymers, copolymers, interpolymers, and multi-block interpolymers. Suitable additives include fillers, such as organic or inorganic particles, including clays, talc, titanium dioxide, zeolites, powdered metals, organic or inorganic fibers, including carbon fibers, silicon nitride fibers, steel wire or mesh, and nylon or polyester cording, nano-sized particles, clays, and so forth; tackifiers, oil extenders, including paraffinic or napthelenic oils; and other natural and synthetic polymers, including other polymers according to embodiments of the invention. Thermoplastic compositions according to other embodiments of the invention may also contain organic or inorganic fillers or other additives such as starch, talc, calcium carbonate, glass fibers, polymeric fibers (including nylon, rayon, cotton, polyester, and polyaramide), metal fibers, flakes or particles, expandable layered silicates, phosphates or carbonates, such as clays, mica, silica, alumina, aluminosilicates or aluminophosphates, carbon whiskers, carbon fibers, nanoparticles including nanotubes, wollastonite, graphite, zeolites, and ceramics, such as silicon carbide, silicon nitride or titania. Silane-based or other coupling agents may also be employed for better filler bonding.

Polymers suitable for blending with the above described polymers include thermoplastic and non-thermoplastic polymers including natural and synthetic polymers. Exemplary polymers for blending include ethylene-vinyl acetate (EVA), ethylene/ vinyl alcohol copolymers, polystyrene, impact modified polystyrene, ABS, styrene/butadiene block copolymers and hydrogenated derivatives thereof (SBS and SEBS), and thermoplastic polyurethanes.

Suitable conventional block copolymers which may be blended with the polymers disclosed herein may possess a Mooney viscosity (ML 1+4 @ 100°C.) in the range from 10 to 135 in some embodiments; from 25 to 100 in other embodiments; and from 30 to 80 in yet other embodiments. Suitable polyolefins especially include linear or low density polyethylene, polypropylene (including atactic, isotactic, syndiotactic and impact modified versions thereof) and poly(4-methyl-1-pentene). Suitable styrenic polymers include polystyrene, rubber modified polystyrene (HIPS), styrene/acrylonitrile copolymers (SAN), rubber modified SAN (ABS or AES) and styrene maleic anhydride copolymers.

The blends may be prepared by mixing or kneading the respective components at a temperature around or above the melt point temperature of one or both of the components. For most multiblock copolymers, this temperature may be above 130°C, most generally above 145°C, and most preferably above 150°C. Typical polymer mixing or kneading equipment that is capable of reaching the desired temperatures and melt plastifying the mixture may be employed. These include mills, kneaders, extruders (both single screw and twin-screw), BANBURY® mixers, calenders, and the like. The sequence of mixing and method may depend on the final composition. A combination of BANBURY® batch mixers and continuous mixers may also be employed, such as a BANBURY® mixer followed by a mill mixer followed by an extruder. Typically, a TPE or TPV composition will have a higher loading of crosslinkable polymer (typically the conventional block copolymer containing unsaturation) compared to TPO compositions. Generally, for TPE and TPV compositions, the weight ratio of block copolymer to multi-block copolymer may range from about 90:10 to 10:90, more preferably from 80:20 to 20:80, and most preferably from 75:25 to 25:75. For TPO applications, the weight ratio of multi-block copolymer to polyolefin may be from about 49:51 to about 5:95, more preferably from 35:65 to about 10:90. For modified styrenic polymer applications, the weight ratio of multi-block copolymer to polyolefin may also be from about 49:51 to about 5:95, more preferably from 35:65 to about 10:90. The ratios may be changed by changing the viscosity ratios of the various components. There is considerable literature illustrating techniques for changing the phase continuity by changing the viscosity ratios of the constituents of a blend and a person skilled in this art may consult if necessary.

The blend compositions may contain processing oils, plasticizers, and processing aids. Rubber processing oils having a certain ASTM designation and paraffinic, napthenic or aromatic process oils are all suitable for use. Generally from 0 to 150 parts, more preferably 0 to 100 parts, and most preferably from 0 to 50 parts of processing oils, plasticizers, and/or processing aids per 100 parts of total polymer may be employed. Higher amounts of oil may tend to improve the processing of the resulting product at the expense of some physical properties. Additional processing aids include conventional waxes, fatty acid salts, such as calcium stearate or zinc stearate, (poly)alcohols including glycols, (poly) alcohol ethers, including glycol ethers, (poly)esters, including (poly)glycol esters, and metal-, especially Group 1 or 2 metal or zinc-, salt derivatives thereof.

For conventional TPO, TPV, and TPE applications, carbon black is one additive useful for UV absorption and stabilizing properties. Representative examples of carbon blacks include ASTM N110, N121, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and average pore volumes ranging from 10 to 150 $cm^3$/100 g. Generally, smaller particle sized carbon blacks are employed, to the extent cost considerations permit. For many such applications the present polymers and blends thereof require little or no carbon black, thereby allowing considerable design freedom to include alternative pigments or no pigments at all.

Compositions, including thermoplastic blends according to embodiments of the invention may also contain anti-ozonants or anti-oxidants that are known to a rubber chemist of ordinary skill. The anti-ozonants may be physical protectants such as waxy materials that come to the surface and protect the part from oxygen or ozone or they may be chemical protectors that react with oxygen or ozone. Suitable chemical protectors include styrenated phenols, butylated octylated phenol, butylated di(dimethylbenzyl) phenol, p-phenylenediamines, butylated reaction products of p-cresol and dicyclopentadiene (DCPD), polyphenolic anitioxidants, hydroquinone derivatives, quinoline, diphenylene antioxidants, thioester antioxidants, and blends thereof. Some representative trade names of such products are WINGSTAY™ S antioxidant, POLYSTAY™ 100 antioxidant, POLYSTAY™ 100 AZ antioxidant, POLYSTAY™ 200 antioxidant, WINGSTAY™ L antioxidant, WINGSTAY™ LHLS antioxidant, WINGSTAY™ K antioxidant, WINGSTAY™ 29 antioxidant, WINGSTAY™ SN-1 antioxidant, and IRGANOX™ antioxidants. In some applications, the anti-oxidants and anti-ozonants used will preferably be non-staining and non-migratory.

For providing additional stability against UV radiation, hindered amine light stabilizers (HALS) and UV absorbers may be also used. Suitable examples include TINUVIN™ 123, TINUVIN™ 144, TINUVIN™ 622, TINUVIN™ 765, TINUVIN™ 770, and TINUVIN™ 780, available from Ciba Specialty Chemicals, and CHEMISORB™ T944, available from Cytex Plastics, Houston TX, USA. A Lewis acid may be additionally included with a HALS compound in order to achieve superior surface quality, as disclosed in U.S. Patent No. 6,051,681. Other embodiments may include a heat stabilizer, such as IRGANOX™ PS 802 FL, for example.

For some compositions, additional mixing processes may be employed to pre-disperse the heat stabilizers, anti-oxidants, anti-ozonants, carbon black, UV absorbers, and/or light stabilizers to form a masterbatch, and subsequently to form polymer blends therefrom.

Suitable crosslinking agents (also referred to as curing or vulcanizing agents) for use herein include sulfur based, peroxide based, or phenolic based compounds. Examples of the foregoing materials are found in the art, including in U.S. Patents No.: 3,758,643, 3,806,558, 5,051,478, 4,104,210, 4,130,535, 4,202,801, 4,271,049, 4,340,684, 4,250,273, 4,927,882, 4,311,628 and 5,248,729.

When sulfur based curing agents are employed, accelerators and cure activators may be used as well. Accelerators are used to control the time and/or temperature required for dynamic vulcanization and to improve the properties of the resulting cross-linked article. In one embodiment, a single accelerator or primary accelerator is used. The primary accelerator(s) may be used in total amounts ranging from about 0.5 to about 4, preferably about 0.8 to about 1.5 phr, based on total composition weight. In another embodiment, combinations of a primary and a secondary accelerator might be used with the secondary accelerator being used in smaller amounts, such as from about 0.05 to about 3 phr, in order to activate and to improve the properties of the cured article. Combinations of accelerators generally produce articles having properties that are somewhat better than those produced by use of a single accelerator. In addition, delayed action accelerators may be used which are not affected by normal processing temperatures yet produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. Certain processing aids and cure activators such as stearic acid and ZnO may also be used. When peroxide based curing agents are used, co-activators or coagents may be used in combination therewith. Suitable coagents include trimethylolpropane triacrylate (TMPTA), trimethylolpropane trimethacrylate (TMPTMA), triallyl cyanurate (TAC), triallyl isocyanurate (TAIC), among others. Use of peroxide crosslinkers and optional coagents used for partial or complete dynamic vulcanization are known in the art and disclosed for example in the publication, "Peroxide Vulcanization of Elastomer," Vol. 74, No 3, July-August 2001.

When the polymer composition is at least partially crosslinked, the degree of crosslinking may be measured by dissolving the composition in a solvent for specified duration, and calculating the percent gel or unextractable component. The percent gel normally increases with increasing crosslinking levels. For cured articles according to embodiments of the invention, the percent gel content is desirably in the range from 5 to 100 percent.

In some embodiments, additives may also include perfumes, algae inhibitors, anti-microbiological and anti-fungus agents, flame retardants and halogen-free flame retardants, as well as slip and anti-block additives. Other embodiments may include PDMS to decrease the abrasion resistance of the polymer. Adhesion of the polymer to the sand may also be improved through the use of adhesion promoters or functionalization or coupling of the polymer with organosilane, polychloroprene (neoprene), or other grafting agents.

Polymer Coated Particles

As described above, the sands or other particulate materials may be coated or incorporated with one or more layers of a polymer or polymeric mixture. The polymer and the particulate materials may be incorporated, in one embodiment, by mixing a thermoplastic polymer with a particulate substrate to form a mixture at a temperature greater than the melting point of the thermoplastic polymer.

In one embodiment, the polymer and the particulate materials may be incorporated by first pre-heating the particulate material to be coated to an elevated temperature. The particulate material may then be fed to a mixer, which may continuously agitate and disperse the contents of the mixer.

A polymer or polymer mixture, as described above, may then be added to the mixer. The amount of polymer added to the mixer may be based upon the amount of particulate material to be coated, and the desired level of coating on the particles. The agitation should be sufficient to evenly distribute the polymer throughout, evenly coating the particles with the polymer.

The temperature of the pre-heated particles may be sufficient to melt at least a portion of the polymer. The particulate material may be pre-heated to a temperature between about 60°C and 350°C, in some embodiments, where the temperature may be based upon the amount of polymer added and the melting point of the polymer. In other embodiments, the sand or other particulate materials may be pre-heated to a temperature between about 140°C and 350°C; between about 80°C and 270°C in other embodiments; and between about 150°C and 250°C in yet other embodiments. In some embodiments, the particulate material may be heated to a temperature less than 199°C; less than 195°C in other embodiments; less than 190°C in other embodiments; less than 180°C in other embodiments; less than 170°C in other embodiments; and less than 160°C in yet other embodiments. In other embodiments, a mixture of the particulate substrate and polymer(s) may be heated to the above described temperatures.

The coated particles may then be cooled to a temperature below the melting point of the polymer by indirect heat exchange or by direct heat exchange, such as by injection of water and/or air into the mixture, after which the coated particles may be collected for use as infill or in other suitable applications. Any agglomerates formed during the coating process may be segregated from the free-flowing material by sieving the particles, and the agglomerates may be discarded or may be deagglomerated for use as infill.

In some embodiments, the polymer or polymer mixture may include one or more of the polymers described above, including: propylene-based homopolymers, copolymers, interpolymers, and multi-block interpolymers; ethylene-based homopolymers, copolymers, interpolymers, and multi-block interpolymers; and combinations thereof. In some embodiments, the thermoplastic polymer coating may contain a polyolefin having a melting point of 100°C or less. In other embodiments, the thermoplastic polymer coating may contain a polyolefin having a melting point of 70°C or less.

In some embodiments, the coated particles may have a dry polymer content ranging from 1 weight percent to 15 weight percent. In other embodiments, the coated particles may have a dry polymer content ranging from 2 weight percent to 13 weight percent; from 3 weight percent to 10 weight percent in other embodiments; from 4 weight percent to 8 weight percent in other embodiments; and from 5 weight percent to 7 weight percent in yet other embodiments. In other embodiments, the coated particles may have a dry polymer content of greater than 5 weight percent; greater than 7 weight percent in other embodiments; greater than 8 weight percent in other embodiments; and greater than 10 weight percent in yet other embodiments. Each of the above weight fractions is based on the combined weight of the particulate substrate (mineral grains, sand, etc.) and the polymer.

As described above, in certain embodiments, the thermoplastic polymer may be a blend of two or more thermoplastic polymers. In some embodiments, the thermoplastic polymer blend may contain at least two thermoplastic polymers having melting points that differ by at least 5°C. In other embodiments, the thermoplastic polymer blend may contain at least two thermoplastic polymers having melting points that differ by at least 10°C; at least 15°C in other embodiments; and at least 20°C in yet other embodiments. In other embodiments, the thermoplastic polymer blend may contain at least two thermoplastic polymers having a melt index, $I_2$, which differs by at least 3 dg/min; at least 5 dg/min in other embodiments; at least 10 dg/min in other embodiments; at least 20 dg/min in yet other embodiments.

In embodiment where a multi-layered coating is desired, a first polymer or polymer blend coating may be applied as described above, such as by mixing the first polymer with the particulate substrate at a temperature greater than the melting point of the polymer. Again, the substrate may be pre-heated to a desired temperature or the substrate-polymer mixture may be heated to a temperature greater than the melting point of the first polymer. The polymer may then be dispersed through agitation, evenly coating the particulate substrate. The coated particles may then be cooled to a temperature below the melting point of the first polymer using water and/or air. The coated particles may then be coated with a second polymer or polymer blend, where the second polymer has a melting point lower than the melting point of the first polymer coating layer.

In some embodiments, the coated particles are cooled to a temperature less than the melting point of the first polymer but greater than the melting point of the second polymer. In other embodiments, the coated particles obtained from the first coating may be re-heated to a temperature greater than the melting point of the second polymer but less than the melting point of the first polymer. The coated particles may then be mixed with the second thermoplastic polymer, melting at least a portion of the second polymer. The second polymer may then be distributed by the mixer, forming an even coating on the particles. The mixture may then be cooled to a temperature less than the melting point of the first polymer, returning a free-flowing particulate material. Again, any agglomerates formed may be removed by sieving, if desired.

In multi-layered embodiments, the first polymer has a melting point greater than the second polymer. For example, in some embodiments, the first polymer may have a meting point greater than about 95°C and the second polymer may have a melting point less than the melting point of the first polymer. In other embodiments, the first polymer may have a melting point greater than about 90°C and the second polymer may have a melting point between about 50°C and 90°C. In other embodiments, the first polymer may have a melting point greater than about 120°C and the second polymer may have a melting point between about 60°C and 110°C.

In some embodiments, the first polymer may have a melting point at least 5°C higher than the melting point of the second polymer. In other embodiments, the first polymer may have a melting point at least 10°C higher than the melting point of the second polymer; at least 15°C higher in other embodiments; and at least 20°C in yet other embodiments.

The specific combination of polymers and melting points will determine the appropriate temperatures for the steps outlined above for forming a multi-layer coated particle. For example, where the first polymer has a melting point of approximately 100°C and the second polymer has a melting temperature of approximately 70°C, the particulate substrate may be heated to a temperature of at least 120°C to coat the particulate substrate with the first polymer. The mixture may then be cooled, re-heated, or maintained at a temperature between 70°C and 100°C to coat the particulate substrate with the second polymer.

In multi-layered embodiments, the coated particles may have an overall polymer content ranging from 1 weight percent to 30 weight percent. In other embodiments, the coated particles may have an overall polymer content ranging from 1 weight percent to 20 weight percent; from 2 weight percent to 15 weight percent in other embodiments; from 3 weight percent to 12 weight percent in yet other embodiments. Each of the above weight fractions is based on the combined weight of the particulate substrate (mineral grains, sand, etc.) and each of the polymer layers (the first polymer, second polymer, third polymer layer, etc.).

In multi-layered embodiments, the coated particles may have a dry inner layer of a first polymer ranging from 1 weight percent to 15 weight percent. In other embodiments, the coated particles may have a dry inner layer content ranging from 2 weight percent to 9 weight percent; from 3 weight percent to 8 weight percent in other embodiments; from 4 weight percent to 7 weight percent in yet other embodiments. The coated particles may have a dry outer layer of a second polymer ranging from I weight percent to 15 weight percent. In other embodiments, the coated particles may have a dry outer layer content ranging from 2 weight percent to 8 weight percent; from 3 weight percent to 5 weight percent in yet other embodiments. Each of the above weight fractions is based on the combined weight of the particulate substrate (mineral grains, sand, etc.), the first polymer, and the second polymer.

As described above, in certain embodiments, the first thermoplastic polymer or the second thermoplastic polymer may be a blend of two or more polymers. In some embodiments, the thermoplastic polymer blend may contain at least two thermoplastic polymers having melting points that differ by at least 5°C. In other embodiments, the thermoplastic polymer blend may contain at least two thermoplastic polymers having melting points that differ by at least 10°C; at least 15°C in other embodiments; and at least 20°C in yet other embodiments. In other embodiments, the thermoplastic polymer blend may contain at least two thermoplastic polymers having a melt index, $I_2$, which differs by at least 3 dg/min; at least 5 dg/min in other embodiments; at least 10 dg/min in other embodiments; at least 20 dg/min in yet other embodiments.

In some embodiments, a polymer coating may be applied as described above. The polymer coating may subsequently be foamed, resulting in a particle having improved softness. In various embodiments, the first polymer layer, the second polymer layer, or both polymer layers may be foamed. For example, a second polymer coating may be applied over a first foamed layer, where the second polymer has a melting point less than that of the foamed polymer.

In yet other embodiments, the particulate substrate may be coated with three or more polymer layers. The melting point of the polymer used in each successive layer should be less than the melting point of the polymer layer to be coated.

In some embodiments, the first polymer layer, the second polymer layer, or both, may be crosslinked. For example, in certain embodiments, the first polymer layer may be crosslinked prior to coating the particulate substrate with the second polymer. In other embodiments, the second polymer may be crosslinked after forming the second layer coating on the particulate substrate.

The agitation should be sufficient to evenly distribute the polymers throughout, evenly coating the particles with the polymers used. In some embodiments, the polymer(s) (first polymer layer, second polymer layer, or both) may coat at least 50 percent of the surface of the particulate substrate. In other embodiments, the polymer(s) may coat at least 60 percent of the surface of the particulate substrate; at least 70 percent in other embodiments; at least 80 percent in other embodiments; and at least 90 percent in yet other embodiments. In some embodiments, the extent of the coating may be observed by visual examination under a microscope, by changes in the overall color of the particulate substrate, or by measuring weight gain/loss and/or particle packing density. For example, where the polymer coating is of one color and the particulate substrate another, a visual inspection of the particles may provide a means to estimate the coating percentage.

In some embodiments, the above described coated particles may be used as infill in a synthetic turf. Deformation of a synthetic turf system after long-time use may depend on the pile height, tufting density, and yarn strength. The type and volume of infill material also influence the final deformation resistance of the turf significantly. The Lisport test may be used to analyze wear performance, and is helpful to design an effective turf system. Additionally, tests may be performed to analyze temperature performance and aging, as well as the bounce and spin properties of the resulting turf. With regard to each of these properties, turf containing the infill materials as described above may meet FIFA specifications for use of the turf in football fields (see, for example, the "February 2005 FIFA Quality Concept Requirements for Artificial Turf Surfaces," the FIFA handbook of test methods and requirements for artificial football turf, which is fully incorporated herein by reference).

Embodiments of the polymer coated substrates described herein may have a color change according to test method EN ISO 20105-A02 of greater than or equal to grey scale 3. Other embodiments of the polymer coated substrates may meet the FIFA requirements for particle size, particle shape, and bulk density, as tested using test methods EN 933 - Part 1, prEN 14955, and EN 13041, respectively. The polymer coated substrates may also comply with the DIN V 18035-7-2002-06 requirements for environmental compatibility.

EXAMPLES

Example 1

Sand having a particle size ranging from 0.3 to 0.7 mm was coated with two layers of UV stabilized polyethylenes as described above. Total polymer content of the coated sand was 6.5 weight percent, based upon the weight of the dry sand. The UV stabilizer was used in an amount of 0.5 weight percent of the polymer.

A Lisport Test was performed upon artificial turf using the coated sand of Example I as infill. The artificial turf included a 16 mm foamed polyethylene elastic layer. The test results indicated excellent wear resistance and no compaction of the sand. After the Lisport test, the infill remained lose and free moving. The infill also met FIFA 2-star test ratings, maintaining good shock absorption, vertical deformation, ball rebound, and rotational resistance after wear. The infill also maintained good drainage.

Some dust was generated in the closed environment of the Lisport test, which simulates wear over 5 years. However, some dust generation during the wear test does not affect the aesthetic properties of the turf and infill due to routine cleaning or washing of the carpet during normal use.

The polymer coated sands produced as described herein may be useful as infill material for artificial soccer and sport surfaces, among other applications. Advantageously, embodiments disclosed herein may provide a polymer coated sand having a homogeneous and uniform coating, good heat and skid resistance, as well as good haptics and aesthetics. In particular, embodiments described herein may provide for a superior balance of these properties as compared to prior art infill, including one or more of improved color retention, better resiliency and wear resistance, better heat resistance, better turf stability at lower fill levels, improved flexibility and softness, and lower cost.

Embodiments utilizing a low melting point polymer, such as AFFFNITY™ GA, alone or in combination with other polyolefins in one or more layers, may provide a very uniform and homogeneous coating, resulting in a softer surface on the infill, resulting in superior wearing resistance, good haptics and aesthetics, and excellent player safety. Use of a low-melting point polymer may also advantageously allow for reduced heating and cooling requirements, decreasing the energy requirements of the process, and resulting in a faster cycle time per batch.

Embodiments of the polymer coated substrates described herein may also be useful in applications including rotomolded soft articles, proppants, infill for other artificial grass applications, such as golf courses and landscaping, and use in heavy layers for noise and vibration dampening, among others.

Other embodiments disclosed herein provide for a higher coating weight and wider choice of polymeric material in terms of composition and molecular weight, allowing for softer materials to be used, resulting in improved dampening characteristics. For example, the melt flow of the polyolefins described herein is not limited. The softer materials produced may result in a longer abrasion resistance due to decreased surface roughness.

**Claims**

1. A particulate material comprising:

   a particulate substrate coated with a first layer comprising a first thermoplastic polymer and a second layer comprising a second thermoplastic polymer;
   wherein the melting point of the first thermoplastic polymer is greater than the melting point of the second thermoplastic polymer.

2. The particulate material of claim 1, wherein the first thermoplastic polymer is selected from propylene-based homopolymers, copolymers, interpolymers, and multi-block interpolymers; ethylene-based homopolymers, copolymers, interpolymers, and multi-block interpolymers; and combinations thereof.

3. The particulate material of claim 1, wherein the particulate substrate is selected from mineral grains, sands, and rubber particles.

4. The particulate material of claim 3, wherein the particulate substrate is a silica-based sand.

5. The particulate material of claim 1, wherein the second thermoplastic polymer is selected from: propylene-based homopolymers, copolymers, interpolymers, and multi-block interpolymers; ethylene-based homopolymers, copolymers, interpolymers, and multi-block interpolymers; and combinations thereof.

6. The particulate material of claim 1, wherein the melting point of the second thermoplastic polymer is 100°C or less.

7. The particulate material of claim 1, wherein the first thermoplastic polymer, the second thermoplastic polymer, or both, has been foamed.

8. The particulate material of claim 1, further comprising an adhesion promoter.

9. The particulate material of claim 1, wherein the particulate material comprises the first polymer in an amount ranging from 1 to 15 weight percent, and the second polymer in an amount ranging from 1 to 15 weight percent, based on the combined weight of the particulate substrate, the first thermoplastic polymer, and the second thermoplastic polymer.

10. The particulate material of claim 1, wherein the particulate material comprises an overall polymer content of from 1 to 20 weight percent, based upon the combined weight of the particulate substrate, the first thermoplastic polymer, and the second thermoplastic polymer.

11. The particulate material of claim 1, wherein the first thermoplastic polymer has a melting point at least 5°C higher than the melting point of the second polymer.

12. The particulate material of claim 1, wherein the first thermoplastic polymer, the second thermoplastic polymer, or both, has a melt index of greater than 40 g/10 min.

13. The particulate material of claim 1, wherein the first thermoplastic polymer coats at least 50% of the surface of the particulate substrate.

14. Artificial turf comprising the particulate material of claim 1.


**Patentansprüche**

1. Partikuläres Material umfassend:

    ein partikuläres Substrat beschichtet mit einer ersten Schicht, umfassend ein erstes thermoplatisches Polymer und eine zweite Schicht, umfassend ein zweites thermoplastisches Polymer;
    wobei der Schmelzpunkt des ersten thermoplastischen Polymers größer ist als der Schmelzpunkt des zweiten thermoplastischen Polymers.

2. Partikuläres Material nach Anspruch 1, wobei das erste thermoplastische Polymer ausgewählt ist aus Propylen-basierten Homopolymeren, Copolymeren, Interpolymeren und Multiblock-Interpolymeren; Ethylen-basierten Homopolymeren, Copolymeren, Interpolymeren und Multiblock-Interpolymeren; und Kombinationen davon.

3. Partikuläres Material nach Anspruch 1, wobei das partikuläre Substrat ausgewählt ist aus Mineralkörnern, Sand und Gummi-Partikeln.

4. Partikuläres Material nach Anspruch 3, wobei das partikuläre Substrat ein Siliziumdioxid-basierter Sand ist.

5. Partikuläres Material nach Anspruch 1, wobei das zweite thermoplastische Polymer ausgewählt ist aus Propylen-basierten Homopolymeren, Copolymeren, Interpolymeren und Multiblock-Interpolymeren; Ethylen-basierten Homopolymeren, Copolymeren, Interpolymeren und Multiblock-Interpolymeren; und Kombinationen davon.

6. Partikuläres Material nach Anspruch 1, wobei der Schmelzpunkt des zweiten thermoplastischen Polymers 100°C oder weniger ist.

7. Partikuläres Material nach Anspruch 1, wobei das erste thermoplastische Polymer, das zweite thermoplastische Polymer oder beide aufgeschäumt wurde.

8. Partikuläres Material nach Anspruch 1, zusätzlich umfassend einen Haftvermittler.

9. Partikuläres Material nach Anspruch 1, wobei das partikuläre Material das erste Polymer in einer Menge von 1 bis 15 Gewichtsprozent und das zweite Polymer in einer Menge von 1 bis 15 Gewichtsprozent, basierend auf dem kombinierten Gewicht des partikulären Substrats, des ersten thermoplastischen Polymers und dem zweiten thermoplastischen Polymers, umfasst.

10. Partikuläres Material nach Anspruch 1, wobei das partikuläre Material einen Gesamtpolymer-Gehalt von 1 bis 20 Gewichtsprozent, basierend auf dem kombinierten Gewicht des partikulären Substrats, des ersten thermoplastischen Polymers und dem zweiten thermoplastischen Polymers, umfasst.

11. Partikuläres Material nach Anspruch 1, wobei das erste thermoplastische Polymer einen Schmelzpunkt, der mindestens 5°C höher ist als der Schmelzpunkt des zweiten Polymers, hat.

12. Partikuläres Material nach Anspruch 1, wobei das erste thermoplastische Polymer, das zweite thermoplastische Polymer oder beide einen Schmelzindex von größer als 40 g/10 Min haben.

13. Partikuläres Material nach Anspruch 1, wobei das erste thermoplastische Polymer mindestens 50% der Oberfläche des partikulären Substrats beschichtet.

14. Künstlicher Torf, umfassend das partikuläre Material nach Anspruch 1.

**Revendications**

1. Matériau particulaire comprenant :

   un substrat particulaire revêtu d'une première couche comprenant un premier polymère thermoplastique et d'une deuxième couche comprenant un deuxième polymère thermoplastique,
   dans lequel le point de fusion du premier polymère thermoplastique est plus élevé que le point de fusion du deuxième polymère thermoplastique.

2. Matériau particulaire conforme à la revendication 1, pour lequel le premier polymère thermoplastique est choisi parmi les homopolymères, copolymères, interpolymères et interpolymères multiblocs à base de propylène, les homopolymères, copolymères, interpolymères et interpolymères multi-blocs à base d'éthylène, et les combinaisons de tels polymères.

3. Matériau particulaire conforme à la revendication 1, pour lequel le substrat particulaire est choisi parmi les minéraux en grains, les sables et les caoutchoucs en particules.

4. Matériau particulaire conforme à la revendication 3, dans lequel le substrat particulaire est un sable à base de silice.

5. Matériau particulaire conforme à la revendication 1, pour lequel le deuxième polymère thermoplastique est choisi parmi les homopolymères, copolymères, interpolymères et interpolymères multi-blocs à base de propylène, les homopolymères, copolymères, interpolymères et interpolymères multiblocs à base d'éthylène, et les combinaisons de tels polymères

6. Matériau particulaire conforme à la revendication 1, dans lequel le point de fusion du deuxième polymère thermoplastique est inférieur ou égal à 100 °C.

7. Matériau particulaire conforme à la revendication 1, dans lequel le premier polymère thermoplastique, le deuxième polymère thermoplastique ou ces deux polymères a été ou ont été expansé(s) en mousse.

8. Matériau particulaire conforme à la revendication 1, qui comprend en outre un promoteur d'adhérence.

9. Matériau particulaire conforme à la revendication 1, lequel matériau particulaire comprend du premier polymère en une proportion de 1 à 15 % en poids et du deuxième polymère en une proportion de 1 à 15 % en poids, proportions rapportées au poids total du substrat particulaire, du premier polymère thermoplastique et du deuxième polymère thermoplastique.

10. Matériau particulaire conforme à la revendication 1, lequel matériau particulaire comprend des polymères en une proportion globale de 1 à 20 %, en poids rapporté au poids total du substrat particulaire, du premier polymère thermoplastique et du deuxième polymère thermoplastique.

11. Matériau particulaire conforme à la revendication 1, dans lequel le point de fusion du premier polymère thermoplastique est plus élevé d'au moins 5 °C que le point de fusion du deuxième polymère.

12. Matériau particulaire conforme à la revendication 1, dans lequel le premier polymère thermoplastique, le deuxième polymère thermoplastique ou ces deux polymères présente(nt) un indice de fluidité à chaud supérieur à 40 g/10 min.

13. Matériau particulaire conforme à la revendication 1, dans lequel le premier polymère thermoplastique recouvre au moins 50 % de la surface du matériau particulaire.

14. Gazon artificiel comprenant un matériau particulaire conforme à la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5043320 A
- US 20060100342 A
- US 20050003193 A
- US 3645992 A, Elston
- US 4076698 A, Anderson
- US 5272236 A
- US 5278272 A
- US 4599392 A
- US 4988781 A
- US 5384373 A
- US 6545088 B
- US 6538070 B
- US 6566446 B
- US 5844045 A
- US 5869575 A
- US 6448341 B
- US 818911 P
- US 5504172 A
- WO 00101745 A
- US 4762890 A
- US 4927888 A
- US 4950541 A
- US 6051681 A
- US 3758643 A
- US 3806558 A
- US 5051478 A
- US 4104210 A
- US 4130535 A
- US 4202801 A
- US 4271049 A
- US 4340684 A
- US 4250273 A
- US 4927882 A
- US 4311628 A
- US 5248729 A

### Non-patent literature cited in the description

- *Peroxide Vulcanization of Elastomer,* July 2001, vol. 74 (3
- FIFA Quality Concept Requirements for Artificial Turf Surfaces. February 2005